# EUROPÄISCHE PATENTSCHRIFT

(11) **EP 4 378 908 B1**
(45) Veröffentlichungstag und Bekanntmachung des Hinweises auf die Patenterteilung: **19.02.2025**
(21) Anmeldenummer: 22211024.9
(22) Anmeldetag: 02.12.2022
(51) Int. Cl.: C04B 26/26, C04B 40/00, C04B 111/00

(54) **VERFAHREN ZUR HERSTELLUNG EINES ASPHALTBAUSTOFFS FÜR DEN STRASSEN- UND WEGEBAU IN EINER HEISSASPHALTMISCHANLAGE**
METHOD FOR PRODUCING AN ASPHALTIC BUILDING MATERIAL FOR ROAD AND PATH CONSTRUCTION IN A HOT ASPHALT MIXING PLANT
PROCÉDÉ DE FABRICATION D'UN MATÉRIAU DE CONSTRUCTION ASPHALTIQUE POUR LA CONSTRUCTION ROUTIÈRE ET ROUTIÈRE DANS UNE INSTALLATION DE MÉLANGE D'ASPHALTE CHAUD

(43) Veröffentlichungstag der Anmeldung: 05.06.2024
(73) Patentinhaber: Österreichische Vialit- Gesellschaft m.b.H., 5280 Braunau am Inn (AT)
(72) Erfinder: HÖGL, Thomas, 4963 St. Peter am Hart (AT)
(74) Vertreter: Puchberger & Partner Patentanwälte

(56) Entgegenhaltungen:
- US-A1- 2008 041 276
- US-A1- 2011 184 090

## Beschreibung

Die Erfindung betrifft ein Verfahren zur Herstellung eines ultratemperaturabgesenkt und kalt einbaubaren Asphaltbaustoffs. Weiters betrifft die Erfindung Zusatzmittel für die Durchführung des Verfahrens.

Asphaltmischgut, im Sinne der EN 13108 wird bei ca. 180°C gemischt und der Einbau des heißen Mischgutes muss vor Erreichen der Mindestverdichtungstemperatur, die bei ca. 130°C liegt, abgeschlossen sein. Nachteile, die sich aus den physikalischen Eigenschaften des Asphaltmischgutes nach dem Stand der Technik ergeben, sind vielfältig:
Die Disposition des Asphaltmischgutes auf die Baustelle muss sehr präzise "just in time" erfolgen, da das Asphaltmischgut nicht auskühlen darf. Die Aushärtung des Asphalts geschieht über die Abkühlung und Versteifung des Bindemittels, benötigt entsprechend lange Zeiträume nach dem Einbau und führt somit zu Verkehrsbelastung durch Stau/Umleitung bzw. zu Schäden durch Missachtung der Abkühlphase. Ungünstige Witterung (Kälte) verhindert/verzögert einen Einbau von Asphaltmischgut bzw. führt zu Entsorgungsmaterial durch frühzeitige Abkühlung.

Wenn die Mindestverdichtungstemperatur - aus welchen Gründen immer - nicht eingehalten werden kann, so muss ein Restasphalt entsorgt werden, oder aber es wird Asphaltmischgut unter Missachtung des Temperaturfensters eingebaut und Schäden in Kauf genommen. Es können keine weiten Strecken für den Transport von Asphaltmischgut überbrückt werden, weil das Asphaltmischgut die nötige Temperatur für den Einbau verlieren würde.

Die Bauweise mit Asphaltmischgut ist nicht flexibel für Veränderungen der Baustellengröße und Witterungsverhältnisse.

Es ist dieser Technologie immanent, dass durch den heißen Einbau gesundheitsschädliche Emissionen / PAKs entstehen und hoher Energieverbrauch durch den Heiß-Mischprozess bei 180°C tritt auf.

Eine Sonderform dieses Asphalts im Sinne der EN 13108 ist der Niedrigtemperaturasphalt, wo die Temperaturgrenzen um ca. 30°C niedriger liegen. Zur Senkung der notwendigen Einbautemperatur des Asphaltmischgutes werden von der Industrie Zusätze, zumeist Wachse, zum Asphaltmischgut angeboten, die die Temperatur des Asphaltmischgutes und die Mindestverdichtungstemperatur reduzieren. Es können damit zwar viele der Emissionen gesenkt werden, es bleiben aber die sonstigen physikalischen Nachteile der Asphalttechnologie beim Einbau weitgehend unverändert erhalten.

Weiters ist es aus dem Stand der Technik bekannt, für den Kalteinbau von Asphaltflecken oder -flächen Kaltmischgut oder Reaktivasphalt einzusetzen. Bei diesen Bindemittelsystemen wird gemäß Kaltasphalt- bzw. Kaltmischguttechnologie in der Regel kalt produziert, beispielsweise bei ca. 40° C, und kalt eingebaut. Solche Kaltmischgüter sind aber aufgrund ihrer Einbaueigenschaften nicht für die Herstellung großflächiger Asphaltdeckschichten mit homogenem Verdichtungsgrad verwendbar.

US 2008/041276 beschreibt ein Verfahren zur Herstellung von Asphaltmischgütern unter Verwendung von Ausbauasphalt (Recyclingasphalt). Es werden Stoffe zugegeben, die (a) die Alterung des Bitumens im Ausbauasphalt reduzieren, (b) den Erwärmungsgrad des Asphaltgranulates begrenzen und (c) den Oxidationsgrad des Bitumens im Ausbauasphalt reduzieren. Insbesondere erfolgt die Zugabe von Weichmacher ("plasticizer") und Härter ("hardener") zum Ausbauasphalt in der Warmphase - zwei Komponenten, die viskositätsvermindernd wirken. Als Weichmacher werden Fluxöle und als Härter FT-Paraffine eingesetzt.

Die vorliegende Erfindung hat das Ziel, das nach herkömmlicher Technologie in Asphaltmischanlagen hergestellte Asphaltmischgut durch einen Reaktivzusatz, also einen oder mehrere reaktive, die Temperatur absenkende Zusätze, in der Mischanlage derart zu modifizieren, dass die Einbau- und Verdichtungstemperatur stark herabgesetzt werden kann, beispielsweise in einer Temperaturspanne zwischen 130°C und 20°C. Die vorliegende Erfindung stellt somit insbesondere einen Asphaltbaustoff bereit, der Asphaltmischgut und einen Reaktivzusatz enthält.

Somit soll Kalteinbau des Asphaltbaustoffs ohne die Nachteile bisheriger Asphalttechnologien aufzuweisen möglich sein. Weiters sollen bei der Herstellung des Asphaltbaustoffs die herkömmlichen großen Anlagen der Asphaltmischguttechnologie verwendbar sein.

Die Erfindung und das erfindungsgemäße Verfahren zur Herstellung des erfindungsgemäßen Asphaltbaustoffs verfolgt die Zielsetzung, durch eine technisch machbare und mögliche Zusammenführung von grundlegenden Asphalttechnologien die oben angeführten Nachteile der Regelbauweise gem. EN 13108 zu überbrücken, bei gleichzeitigem Erreichen und Einhalten der hohen technischen Standards.

Die Erfindung vereint erstmals für Heißasphaltanlagen die beiden Technologie-Welten der Asphaltmischguttechnologie (heiß) und der modernen kalten Mischguttechnologie und kann Nachteile von beiden Mischgut-Technologien somit überwinden, ohne auf technischer Seite Qualitätsabstriche hinnehmen zu müssen.

Basis ist ein Asphaltbaustoff mit einer erfindungsgemäß sehr abgesenkten Herstellungstemperatur, insbesondere in einem Bereich zwischen 120°C und 150°C. Aus dem Stand der Technik zur Verbesserung der physikalischen Eigenschaften beim Einbau des Asphaltbaustoffs werden Wachse, in einer erfindungsgemäßen Sonderform und stofflichen Zusammensetzung, zur weiteren Absenkung der Asphalttemperatur zugegeben (z.B. beschrieben in GESTRATA Journal - Das Asphalt Magazin, Mai 2011, Folge 132). Der Nutzen der Zugabe von Wachs geht in der erfindungsgemäßen Anwendung über diese bloße Abkühlungsfunktion und Verschiebung der Mindestverdichtungstemperatur des Asphaltmischgutes hinaus.

Schließlich wird das Wirkprinzip der Wachszugabe noch grundlegend ausgeweitet durch die Anwendung der Reaktivasphalt-Technologie. Gemäß Erfindung werden dadurch Mischgut-Qualitäten erreicht, die nicht bloß temperaturabgesenkt, sondern kalt eingebaut werden können und anstatt durch Abkühlung des Bindemittels Bitumen durch einen Reaktionsprozess im Bindemittel zur gesteuerten Aushärtung - im Sinne einer Ansteifung des Bindemittels - geführt werden.

Der erfindungsgemäß hergestellte Asphaltbaustoff kann entweder unmittelbar nach Produktion warm eingebaut werden, oder bei Umgebungstemperatur begrenzt gelagert werden, oder für Kleinbaustellen für die Lagerung und Transport in geeignete Gebinde abgefüllt werden.

Verwendung finden kann das erfindungsgemäße Verfahren bzw. der erfindungsgemäße Asphaltbaustoff neben dem eigentlichen Straßen- und Wegebau auch bei der Herstellung von Nebenanlagen oder anderen Asphaltflächen sowie zur Sanierung von bestehenden Asphaltflächen unterschiedlicher Art.

Die Erfindung betrifft überdies die Verwendung eines erfindungsgemäßen Reaktivzusatzes. Dieser Reaktivzusatz kann alle Merkmale aufweisen, die in Zusammenhang mit dem Verfahren beschrieben werden.

Ferner betrifft die Erfindung einen Asphaltbaustoff als solchen, der Asphaltmischgut aus Mineralstoffen und Bitumen umfasst. Der Asphaltbaustoff enthält ferner einen Reaktivzusatz, in dem eine Bitumen-lösende Fluxkomponente und eine Feststoff-Wachskomponente enthalten ist. Der Reaktivzusatz in diesem Asphaltbaustoff kann alle Merkmale aufweisen, die in Zusammenhang mit dem Verfahren und/oder der Verwendung beschrieben werden.

Das in dem Asphaltbaustoff enthaltene Asphaltmischgut kann eine Temperatur zwischen 120°C und 150°C aufweisen.

### Herstellungsbeispiel für den erfindungsgemäßen Asphaltbaustoff und dessen Einbau:

Die Herstellung des der Erfindung zugrundeliegenden Asphaltbaustoffs erfolgt auf einer Standard-Asphaltmischanlage, welche zur Herstellung von Asphaltmischgut geeignet ist. Das Mineralgemisch wird beispielhaft bei ca. 130°C getrocknet und anschließend mit Normbitumen z.B. B70/100 umhüllt. Es muss nicht weiter auf ca. 180°C, wie es Stand der Technik bei Asphaltmischgütern ist, aufgeheizt werden. Es ist jedoch anzumerken, dass in anderen Ausführungen, etwa wenn ein sehr feuchtes Mineralgemisch eingesetzt wird, eine höhere Temperatur sinnvoll sein kann, insbesondere bis ca. 150°C.

Ferner ist anzumerken, dass in gewissen Ausführungsformen auch Recycling-Asphalt an Stelle des Mineralgemischs bzw. als Teil des Mineralgemischs zur Anwendung kommen kann. Das Mineralgemisch bzw. der entsprechende Teil des Mineralgemischs ist dann ein Mineral-/Bitumengemisch.

Weiters wird der Reaktivzusatz, bestehend aus einer Bitumen-lösenden Fluxkomponente A und einer Wachs-Feststoffkomponente B wobei die Feststoff-Wachskomponente als Füllstoffbestandteil einen Füllstoff wie Steinmehl, Talcum, Zement, Kalkmehl, Gips, Flugaschezement oder Schlackenmehl der Eisen- oder Stahlerzeugung und als Wachsbestandteil ein synthetisches oder natürliches Wachs enthält wie nachstehend weiter beschrieben, zugegeben und der erfindungsgemäße Asphaltbaustoff wird fertig gemischt.

Durch diese Zusätze wird die Mischtemperatur unmittelbar noch während dem Mischvorgang weiter auf einen Temperaturbereich von < 100°C reduziert. Die Komponenten des Reaktivzusatzes können je nach konkretem Anwendungsfall mit Umgebungstemperatur, ohne Zuführung von Heizenergie, zugegeben werden, und müssen daher nicht zuvor auf eine gewisse Temperatur aufgeheizt werden.

Dieser so hergestellte Asphaltbaustoff härtet somit nicht durch Temperaturabsenkung aus. Er kann daher in der Folge entweder unmittelbar verarbeitet werden oder auch (zwischen)gelagert werden.

Der Einbau erfolgt nach den gleichen technischen Grundsätzen wie bei Asphaltmischgut. Die Aushärtung erfolgt jedoch nicht über den Abkühlprozess, sondern durch eine reaktive Aushärtung, welche mit einem Aktivator erfolgt. Während der Verlegung des erfindungsgemäßen Asphaltbaustoffs wird der Aktivator zugegeben bzw. eingemischt, welcher den Reaktionsprozess starten kann. Die Verdichtung bringt die nötige Energie zur Minimierung des technischen Hohlraumgehaltes des Asphaltbaustoffs ein, erzeugt dabei die nötigen Scherkräfte für die homogene Auslösung der Aushärtungsreaktion im Asphaltbaustoff, und muss vor dem endgültigen Aushärten abgeschlossen sein. Das so hergestellte Endprodukt erfüllt die gleichen Norm-Anforderungen wie Asphaltschichten, die aus Asphaltmischgut nach dem Stand der Technik hergestellt sind.

Die Mindestverarbeitungstemperatur des erfindungsgemäßen Asphaltbaustoffs beträgt je nach Konzipierung der Mischrezeptur zwischen 0°C und +30°C. So ist es also möglich, diesen Asphaltbaustoff im Frühjahr / Herbst bis gemäßigten Winter, und auch erst einige Tage nach der Herstellung zu verarbeiten. Dadurch kann auch auf Einflüsse wie z.B. auf plötzliche Wetteränderungen oder Baustellengröße besser reagiert werden, was am Ende weniger Abfallasphalt produziert und gleichzeitig die Qualität der Asphaltschichten steigert.

Der so hergestellte Asphaltbaustoff bietet nunmehr zusammengefasst die angeführten besonderen Vorteile und überwindet die bekannten Nachteile von Asphaltmischgut gemäß Stand der Technik:
- Durch die wesentlich niedrigere Herstell- und Einbautemperatur können umweltrelevante Aspekte durch Energieeinsparung gehoben werden.
- Durch die Verwendung von Recycling-Asphalt kann die Umweltfreundlichkeit der Produkte gesteigert sowie Kriterien einer nachhaltigen Beschaffung erfüllt werden.
- Die maximale Arbeitsplatzkonzentration durch Emissionen wie Aerosole und PAK (polycyclische aromatische Kohlenwasserstoffe) wird durch diesen Asphaltbaustoff auf ein absolutes Minimum reduziert, beim Einbau bei Umgebungstemperatur fallen keine Emissionen an.
- Weiter fallen weniger Mengen an Entsorgungsasphalt an, welcher beim Asphaltmischgut durch Übermengen auf der Baustelle bzw. durch zu schnelles Abkühlen - und dadurch nicht mehr verarbeitungsfähig - entsteht.
- Eine frühere Verkehrsfreigabe bei Verwendung dieses Asphaltbaustoffes verringert Verkehrsbehinderung und Staubildung, da die Aushärtung in der Regel nach der Aktivatorzugabe sofort beginnt und in der Regel binnen weniger Stunden abgeschlossen ist, womit die Asphaltoberfläche befahrbar ist.
- Bei hohen Umgebungstemperaturen beeinflusst der gesteuerte Reaktionsprozess die Verkehrsfreigabe aufgrund der schnelleren Aushärtung positiv.
- Bei kühlen Umgebungstemperaturen kommt es auf Grund der niedrigen Temperaturen zu einer Viskositätserhöhung des erfindungsgemäßen Asphaltbaustoffs und dadurch zu einer ersten Standfestigkeit des Asphaltbaustoffs. Bei diesen Bedingungen wird der Reaktionsprozess darüber hinaus verzögert und es gibt dadurch vorteilhafterweise ein größeres Zeitfenster für Verdichtungstätigkeiten.
- Die Vorteile in der Arbeitsplanung liegen in einer Erleichterung der Disposition des Mischgutes. Es ist länger verarbeitbar, beschränkt lagerfähig und deckt somit auch einen größeren Transportradius (> 80 km) zur Baustelle ab. Es werden auch Überstunden bei der Produktion eingespart, da das Mischgut nicht immer "just in time" hergestellt werden muss.
- Einbauhinderungsgründe wie Wetter, Distanz zur Baustelle, kurzfristige Änderung der Baustellengröße verlieren an negativem Einfluss.

Ferner bietet der erfindungsgemäße Asphaltbaustoff unter anderem auch die folgenden Vorteile gegen Kaltmischgut gemäß Stand der Technik:
- Der erfindungsgemäße Asphaltbaustoff ist für die Herstellung großflächiger Asphaltdeckschichten geeignet, die einen homogene Verdichtungsgrad aufweisen.
- Es wird im Vergleich zu Standard-Kaltmischgütern rasch eine hohe Endfestigkeit erreicht.

Beim erfindungsgemäßen System und Verfahren wird der Asphaltbaustoff heiß in einem Arbeitsgang produziert (zwischen 120°C und 150°C, insbesondere bei ca. 130°C). Die Nutzung des Wirkprinzips des reaktiven Bindemittelsystems nach Stand der Technik alleine könnte allerdings zu keinem Erfolg bei der Anwendung in der Asphaltmischgut-Technologie führen. Das Bindemittel und Asphaltmischgut würden schon vor dem Abkühlungsprozess aushärten.

Der erfindungsgemäß verwendete Reaktivzusatz umfasst neben der Fluxkomponente und der Feststoffkomponente zusätzlich eine Wachskomponente, wobei letztere bekanntermaßen die Mindestverdichtungstemperatur herabsetzt.

Aufgrund der Herstellung des erfindungsgemäßen Asphaltbaustoffs in einem Arbeitsgang wird somit ein im Reaktivzusatz enthaltenes Wachs, beispielsweise ein Fischer Tropsch-Wachs, zum Einsatz gebracht, das die Asphaltmischguttemperatur (wie bei der Herstellung von Niedrig-Temperatur-Asphalt) unmittelbar nach Zugabe bekanntermaßen um ca. 20° - 30°C reduziert.

Das Wirkprinzip des fertigen erfindungsgemäßen Asphaltbaustoffs ist ein Aushärteprozess, der auf der technischen Grundlage des reaktiven und kalt härtenden Bindemittels basiert (wie in AT 406 375 beschrieben), und nicht wie beim Stand der Technik des Asphaltmischgutes durch Viskositätserhöhung des Bindemittels durch Auskühlung.

Völlig überraschend, und für den Fachmann nicht naheliegend, hat sich bei Versuchen herausgestellt, dass bei gleichzeitiger erfindungsgemäßer Verwendung von Fluxkomponente, und Feststoff- und Wachskomponente es zu einer vollständigen Veränderung der physikalischen Eigenschaften des erfindungsgemäßen Asphaltbaustoffs im Vergleich zu herkömmlichem Asphaltmischgut kommt, und die Asphaltmischgut-Technologie plötzlich kalt angewendet / eingebaut werden kann.

Im Labor konnte gezeigt werden, dass das Wachs, neben der Herabsetzung der Temperatur des Asphaltmischgutes, beim anschließenden Abkühlvorgang auch eine vorzeitige Reaktion (Aushärtung) des Asphaltbaustoffs hintanhält. Die Wachskomponente schützt durch eine Art "Konservierung" die das eingebrachte Reaktivsystem vor einer Reaktion und Auslösung der Aushärtung des Baustoffs.

Die Bestandteile des Reaktivzusatzes können dem Asphaltmischgut gemeinsam oder getrennt zugegeben werden. Somit sind unterschiedliche Ausführungsvarianten der Erfindung möglich:

### Variante 1

### • Fluxkomponente A = Ölgemisch

Diese ist ein Gemisch aus weichmachenden nichtflüchtigen Ölen, z.B. mineralische, synthetische oder vegetabile Öle oder Fette, oder ein daraus abgeleitetes Derivat, die jeweils in der Lage sind Bitumen zu lösen. Diese werden auch Fluxöle genannt.

### • Feststoff-Wachskomponente B = Wachs / Füller / Faser (optional)

Ein füllender Zusatz wie Steinmehl, Talkum, Zement, Kalkmehl, Gips, Flugaschezement, Schlackenmehl der Eisen oder Stahlerzeugung wird mit einem synthetischen oder natürlichen Wachs und gegebenenfalls mit Faser gemischt und gegebenenfalls pelletiert. Das Mischungsverhältnis Füller zu Wachs beträgt bevorzugt ca. 90 - 50 Teile Füller zu 10 - 50 Teile Wachs.

Das Verhältnis von Fluxkomponente A zu Feststoff-WachsKomponente B beträgt in dem erfindungsgemäßen Reaktivzusatz beispielsweise ca. 40:60. Diese beiden Komponenten werden in Variante 1 beim Mischprozess nacheinander zum Asphaltmischgut zugegeben.

### Variante 2

### • Fluxkomponente A = Ölgemisch

Diese ist ein Gemisch aus weichmachenden nichtflüchtigen Ölen, z.B. mineralische, synthetische oder vegetabile Öle oder Fette, oder ein daraus abgeleitetes Derivat, die jeweils in der Lage sind Bitumen zu lösen. Diese werden auch Fluxöle genannt.

### • Feststoff-Wachskomponente B = Wachs / Füller / Öl / Faser (optional)

Ein füllender Zusatz wie Steinmehl, Talkum, Zement, Kalkmehl, Gips, Flugaschezement, Schlackenmehl der Eisen oder Stahlerzeugung wird mit einem synthetischen oder natürlichen Wachs, Faser (optional) und Öl gemischt und gegebenenfalls pelletiert. Das Öl ist ein Gemisch aus weichmachenden nichtflüchtigen Ölen, z.B. mineralische, synthetische oder vegetabile Öle oder Fette, oder ein daraus abgeleitetes Derivat, die jeweils in der Lage sind Bitumen zu lösen, diese werden auch Fluxöle genannt.

Das Verhältnis von Fluxkomponente A zu Feststoff-Wachskomponente B ist hier durch die Zugabe von Öl in die Feststoff-Wachskomponente B entsprechend anzupassen. Das Vorhandensein von Öl in der Feststoff-Wachskomponente B führt dazu, dass, weniger Wachs in dieser Komponente enthalten ist. Diese Variante eignet sich beispielsweise für Handware.

Die beiden Komponenten werden in Variante 2 beim Mischprozess nacheinander zum Asphaltmischgut zugegeben.

### Variante 3

### • Komponentenmischung / 1-komponentiger Zusatz

Ein füllender Zusatz wie Steinmehl, Talkum, Zement, Kalkmehl, Gips, Flugaschezement, Schlackenmehl der Eisen oder Stahlerzeugung wird mit einem synthetischen oder natürlichen Wachs, Faser (optional) und Öl gemischt und gegebenenfalls pelletiert. Das Öl ist ein Gemisch aus weichmachenden nichtflüchtigen Ölen, z.B. mineralische, synthetische oder vegetabile Öle oder Fette, oder ein daraus abgeleitetes Derivat, die jeweils in der Lage sind Bitumen zu lösen, diese werden auch Fluxöle genannt. Das Mischungsverhältnis Öl zu Wachs und Füller beträgt bevorzugt zwischen 40:60 und 70:30 Teile.

Die Bestandteile der Komponentenmischung werden in Variante 3 miteinander vermischt und dann gemeinsam zum Asphaltmischgut zugegeben.

Allgemein ist anzumerken, dass die Komponente A auch als Fluxkomponente bezeichnet werden kann, während die Komponente B auch als Feststoff-Wachskomponente bezeichnet werden kann. Werden die Komponenten A und B vor der Zugabe zum Asphaltmischgut miteinander vermischt, kann die so erhaltene Komponentenmischung auch als Flux-Feststoff-Wachskomponente bezeichnet werden.

Die Zugabemenge des erfindungsgemäßen Reaktivzusatzes zum Endprodukt ist abhängig vom Baustofftyp bzw. vom verwendeten Bitumen, wobei das Verhältnis Normbitumen zu Reaktivzusatz beispielsweise ca. 40:60 beträgt.

Der effektive Bindemittelgehalt im Endprodukt ist wiederum sehr ähnlich wie jener des gleichen Asphaltmischguttyps, hergestellt nach dem Stand der Technik.

Allgemein ist anzumerken, dass alle Gehaltsangaben, sofern nicht anders bezeichnet, auf dem Gewicht der jeweiligen Komponenten basieren, beispielsweise Gewichtsteile oder Gewichtsverhältnisse.

### Ausführungsbeispiele:

Als Beispiel für losen, für den unmittelbaren Einbau konzipierten erfindungsgemäßen Asphaltbaustoff, der B50/70 basierendes Asphaltmischgut gemäß EN 13108 verwendet, seien angeführt (jeweils in Gewichtsprozent):

### Mischrezeptur AC 8:

| | |
|---|---|
| Mineral | 92,0% |
| B50/70 | 4,0% |
| Reaktivzusatz gem. Variante 1 | 4.0% |
| Summe | 100,0% |

| | |
|---|---|
| *Bitumen + Reaktivzusatz = 8%, entspricht 6,3% eff. Bindemittel* | |

### Mischrezeptur AC 16:

| | |
|---|---|
| Mineral | 92,5% |
| B50/70 | 3,3% |
| Reaktivzusatz gem. Variante 1 | 4.2% |
| Summe | 100,0% |

| | |
|---|---|
| *Bitumen + Reaktivzusatz = 7,5%, entspricht 5,9% eff. Bindemittel* | |

Der Reaktivzusatz gemäß diesem Ausführungsbeispiel ist ein zweikomponentiger Reaktivzusatz aus einer Fluxkomponente A und einer Feststoff-Wachskomponente B, wobei die Fluxkomponente A etwa 20 Gew.-% Tallöl, etwa 20 Gew.-% Rapsöl und etwa 60 Gew.-% mineralölstämmiges Öl enthält, und wobei die Feststoff-Wachskomponente B eine Mischung aus etwa 80 Gew.-% Bienenwachs und etwa 20 Gew.-% Zement ist. Die Komponenten werden getrennt voneinander in einem Verhältnis von etwa 60 Gew.-% A und etwa 40 Gew.-% B mit dem Asphaltmischgut vermischt, um den erfindungsgemäßen Asphaltbaustoff zu erhalten.

Die Konzipierung der Mischrezeptur kann an die gewünschte Einbaumethodik, die Kornzusammensetzung, den Anteil an Recycling-Asphalt und das vorhandene Basis-Bindemittel (bevorzugt B 25 - B 300) eingestellt werden.

Unterschiede zwischen Asphaltmischgut nach Stand der Technik und dem erfindungsgemäßen Asphaltbaustoff zusammengefasst:

| | **Asphaltmischgut** | | **erfindungsgem. Asphaltbaustoff** |
|---|---|---|---|
| Mischtemperatur | | ca. 180°C | ca. 130°C |
| Einbautemperatur min. | | 130°C | 0°C |
| Verkehrsfreigabe nach Verdichtung | | ca. 2 - 5 Std. | 0,5 - 2 Std. |
| Transportradius | | < 80km | bedingt unbegrenzt |
| Geringe Energiekosten | | nein | ja |
| Längere Verarbeitbarkeit | | nein | ja |
| Lagerfähigkeit | | nein | ja |
| Emissionen bei Verlegung (PAK-Wert) | | problematisch | nicht problematisch |
| Aktivator beim Einbau erforderlich | | nein | ja* |

| | | | |
|---|---|---|---|
| * muss gegebenenfalls nicht gesondert zugegeben werden, beispielsweise bei Verarbeitung des Asphaltbaustoffs für Kleinreparaturmaßnahmen bei besonders hoher Luftfeuchtigkeit und/oder Regen | | | |

## Patentansprüche

1. **Verfahren** zur Herstellung eines Asphaltbaustoffs für den Straßen- und Wegebau, wobei in einer Heißasphaltmischanlage ein Asphaltmischgut aus Mineralstoffen und Bitumen sowie gegebenenfalls temperaturerniedrigendem Zusatzstoff hergestellt wird, **dadurch gekennzeichnet,**
- **dass** dem Asphaltmischgut in einer Mischanlage als Reaktivzusatz eine Bitumen-lösende Fluxkomponente und eine Feststoff-Wachskomponente zugemischt wird, die Feststoff-Wachskomponente als Füllstoffbestandteil einen Füllstoff in Form von Steinmehl, Talcum, Zement, Kalkmehl, Gips, Flugaschezement oder Schlackenmehl der Eisen- oder Stahlerzeugung und als Wachsbestandteil ein synthetisches oder natürliches Wachs enthält, und
- **dass** beim oder kurz vor dem Einbau des Asphaltbaustoffs gegebenenfalls ein Aktivator zugemischt wird.

2. Verfahren nach Anspruch 1, **dadurch gekennzeichnet, dass** die Asphaltmischgut vor der Zugabe des Reaktivzusatzes eine Temperatur aufweist, die zumindest dem Schmelzpunkt des in der Feststoff-Wachskomponente enthaltenen Wachses entspricht, wobei die Temperatur bevorzugt zwischen 120°C und 150°C liegt.

3. Verfahren nach Anspruch 1 oder 2, **dadurch gekennzeichnet,**
- **dass** die Fluxkomponente ein Öl oder Ölgemisch aus der Gruppe weichmachender Öle oder Fette, mineralische Öle, synthetische und vegetabile Öle und daraus hergestellte Derivate ist, die zum Lösen von Bitumen geeignet sind.

4. Verfahren nach Anspruch 1, **dadurch gekennzeichnet,**
- **dass** der Füllstoffbestandteil und der Wachsbestandteil im Verhältnis 90 bis 50 Gewichtsteile Füllstoffbestandteil und 10 bis 50 Gewichtsteile Wachsbestandteil vermischt und mit der Fluxkomponente dem Asphaltmischgut in der Heißmischanlage zugegeben wird.

5. Verfahren nach einem der Ansprüche 1 bis 4, **dadurch gekennzeichnet,**
- **dass** die Feststoff-Wachskomponente zusätzlich ein Öl oder Ölgemisch aus der Gruppe weichmachender Öle oder Fette, mineralische Öle, synthetische und vegetabile Öle und daraus hergestellte Derivate, die zum Lösen von Bitumen geeignet sind, enthält, wobei das Öl oder Ölgemisch insbesondere zumindest ein Teil der Fluxkomponente ist und/oder
- **dass** die Feststoff-Wachskomponente zusätzlich Faser enthält.

6. Verfahren nach einem der Ansprüche 1 bis 5, **dadurch gekennzeichnet,**
- **dass** der gegebenenfalls zugesetzte Aktivator aus der Gruppe Wasser, Glykole, Fettalkohole, Tenside (anionische, nichtanionische oder kationische) oder deren Lösungen in Wasser oder anderen Lösungsmitteln, organische und anorganische Säuren und Laugen, Metallsalze, Schwefel und seine Verbindungen, Peroxide, Latex oder Kunstharzdispersionen ausgewählt wird.

7. Verfahren nach einem der Ansprüche 1 bis 6, **dadurch gekennzeichnet,**
- **dass** das Verhältnis Fluxkomponente zu Feststoff-Wachskomponente zwischen 40:60 und 70:30 beträgt.

8. Verfahren nach einem der Ansprüche 1 bis 7, **dadurch gekennzeichnet,**
- **dass** das Verhältnis Bitumen zu Reaktivzusatz zwischen 30:70 und 70:30 beträgt.

9. Verfahren nach einem der Ansprüche 1 bis 8, **dadurch gekennzeichnet,**
- **dass** der zum Einbau fertige Asphaltbaustoff einen Mineralanteil von 85 bis 95 Gewichtsprozent, einen Bitumenanteil von 2,0 bis 14 Gewichtsprozent und einen Anteil Reaktivzusatz von 1 bis 13 Gewichtsprozent aufweist, und/oder
- **dass** der Asphaltbaustoff die in EN 13108 und/oder die in den Anforderungen und Vorgaben für Kaltmischgüter zulässigen Bindemittel-, Mineral- und Zusatzanteile aufweist.

10. Verfahren nach einem der Ansprüche 1 bis 9, **dadurch gekennzeichnet, dass** die Mineralstoffe aus Recyclingasphalt bestehen oder diesen umfassen.

11. Verfahren nach einem der Ansprüche 1 bis 10, **dadurch gekennzeichnet,**
- **dass** dem Asphaltmischgut die Fluxkomponente und die Feststoff-Wachskomponente getrennt voneinander zugemischt werden, oder
- **dass** die Fluxkomponente und die Feststoff-Wachskomponente miteinander vermischt werden und anschließend als Flux-Feststoff-Wachskomponente dem Asphaltmischgut zugemischt werden.

12. **Verwendung** eines Reaktivzusatzes bei der Herstellung eines Asphaltbaustoffs auf Basis eines Asphaltmischguts aus Mineralstoffen und Bitumen, **dadurch gekennzeichnet, dass** der Reaktivzusatz eine Bitumen-lösende Fluxkomponente und eine Feststoff-Wachskomponente enthält, wobei die Feststoff-Wachskomponente als Füllstoffbestandteil einen Füllstoff wie Steinmehl, Talcum, Zement, Kalkmehl, Gips, Flugaschezement oder Schlackenmehl der Eisen- oder Stahlerzeugung und als Wachsbestandteil ein synthetisches oder natürliches Wachs enthält.

13. Verwendung nach Anspruch 12, **dadurch gekennzeichnet, dass** das Asphaltmischgut vor der Zugabe des Reaktivzusatzes eine Temperatur aufweist, die zumindest dem Schmelzpunkt des in der Feststoff-Wachskomponente enthaltenen Wachses entspricht, wobei die Temperatur bevorzugt zwischen 120°C und 150°C liegt.

14. **Asphaltbaustoff** enthaltend Asphaltmischgut aus Mineralstoffen und Bitumen, **dadurch gekennzeichnet, dass** der Asphaltbaustoff einen Reaktivzusatz enthält, der eine Bitumen-lösende Fluxkomponente und eine Feststoff-Wachskomponente enthält, wobei die Feststoff-Wachskomponente als Füllstoffbestandteil einen Füllstoff wie Steinmehl, Talcum, Zement, Kalkmehl, Gips, Flugaschezement oder Schlackenmehl der Eisen- oder Stahlerzeugung und als Wachsbestandteil ein synthetisches oder natürliches Wachs enthält.

15. Asphaltbaustoff nach Anspruch 14, **dadurch gekennzeichnet, dass** er eine Einbautemperatur zwischen 0°C und 130°C aufweist.

## Claims

1. **A method** for producing an asphalt construction material for road and path construction, wherein an asphalt mixture is produced in a hot asphalt mix plant from mineral aggregates and bitumen and optionally a temperature-lowering additive, **characterised**
- **in that** a bitumen-dissolving flux component and a solid wax component are added to the asphalt mixture as a reactive additive in a mix plant, the solid wax component contains a filler in the form of rock flour, talcum, cement, lime flour, gypsum, fly ash cement or slag flour from iron or steel production as a filler portion and a synthetic or natural wax as a wax portion, and
- **in that**, optionally, an activator is added during or shortly before the installation of the asphalt construction material.

2. The method according to claim 1, **characterised in that** the asphalt mixture has a temperature prior to the addition of the reactive additive that is at least equivalent to the melting point of the wax contained in the solid wax component, wherein the temperature is preferably between 120 °C and 150 °C.

3. The method according to claim 1 or 2, **characterised**
- **in that** the flux component is an oil or oil mixture from the group of plasticising oils or fats, mineral oils, synthetic and vegetable oils and derivatives produced therefrom, which are suitable for dissolving bitumen.

4. The method according to claim 1, **characterised**
- **in that** the filler portion and the wax portion are mixed in a ratio of 90 to 50 parts by weight of the filler portion and 10 to 50 parts by weight of the wax portion and added to the asphalt mixture in the hot mix plant together with the flux component.

5. The method according to one of claims 1 to 4, **characterised**
- **in that** the solid wax component additionally contains an oil or oil mixture from the group of plasticising oils or fats, mineral oils, synthetic and vegetable oils and derivatives produced therefrom which are suitable for dissolving bitumen, wherein the oil or oil mixture is in particular at least a part of the flux component, and/or
- **in that** the solid wax component also contains fibre.

6. The method according to one of claims 1 to 5, **characterised**
- **in that** the optionally added activator is selected from the group of water, glycols, fatty alcohols, surfactants (anionic, nonanionic or catonic) or solutions thereof in water or other solvents, organic and inorganic acids and alkalis, metal salts, sulphur and its compounds, peroxides, latex or synthetic resin dispersions.

7. The method according to one of claims 1 to 6, **characterised**
- **in that** the ratio of flux component to solid wax component is between 40:60 and 70:30.

8. The method according to one of claims 1 to 7, **characterised**
- **in that** the ratio of bitumen to reactive additive is between 30:70 and 70:30.

9. The method according to one of claims 1 to 8, **characterised**
- **in that** the asphalt construction material ready for installation has a mineral content of 85 to 95 % by weight, a bitumen content of 2.0 to 14 % by weight and a reactive additive content of 1 to 13 % by weight, and/or
- **in that** the asphalt construction material includes the binder, mineral and additive proportions permitted in EN 13108 and/or in the requirements and specifications for cold mixes.

10. The method according to one of claims 1 to 9, **characterised in that** the mineral aggregates consist of or comprise recycled asphalt.

11. The method according to one of claims 1 to 10, **characterised**
- **in that** the flux component and the solid wax component are mixed separately into the asphalt mixture, or
- **in that** the flux component and the solid wax component are mixed with each other and then added to the asphalt mixture as a flux-solid wax component.

12. **A use** of a reactive additive in the production of an asphalt construction material based on an asphalt mixture of mineral aggregates and bitumen, **characterised in that** the reactive additive contains a bitumen-dissolving flux component and a solid wax component, wherein the solid wax component contains a filler such as rock flour, talcum, cement, lime flour, gypsum, fly ash cement or slag flour from iron or steel production as a filler portion and a synthetic or natural wax as a wax portion.

13. The use according to claim 12, **characterised in that** prior to the addition of the reactive additive the asphalt mixture has a temperature which is at least equivalent to the melting point of the wax contained in the solid wax component, wherein the temperature is preferably between 120 °C and 150 °C.

14. **An asphalt construction material** containing an asphalt mixture of mineral aggregates and bitumen, **characterised in that** the asphalt construction material contains a reactive additive which contains a bitumen-dissolving flux component and a solid wax component, wherein the solid wax component contains a filler such as rock flour, talcum, cement, lime flour, gypsum, fly ash cement or slag flour from iron or steel production as a filler portion and a synthetic or natural wax as a wax portion.

15. The asphalt construction material according to claim 14, **characterised in that** it has an installation temperature between 0 °C and 130 °C.

## Revendications

1. **Procédé** de fabrication d'un matériau de construction asphaltique pour la construction de routes et de chemins, dans lequel un mélange asphaltique est fabriqué dans une installation de mélange d'asphalte chaud à partir de matières minérales et de bitume ainsi que, le cas échéant, d'un additif abaissant la température, **caractérisé**
- **en ce que** l'on mélange dans une installation de mélange au mélange asphaltique, en tant qu'additif réactif, un constituant fluxant dissolvant le bitume et un constituant de cire solide, le constituant de cire solide contient, en tant que constituant de charge, une charge sous forme de pierre pulvérisée, de talc en poudre, de ciment, de farine de chaux, de gypse, de ciment de cendres volantes ou de farine de scorie de la production de fer ou d'acier et, en tant que constituant de cire, une cire synthétique ou naturelle, et
- **en ce que**, lors de la pose du matériau de construction asphaltique ou juste avant, un activateur est éventuellement mélangé.

2. Procédé selon la revendication 1, **caractérisé en ce que** le mélange asphaltique présente, avant l'ajout de l'additif réactif, une température qui correspond au moins au point de fusion de la cire contenue dans le constituant de cire solide, la température étant de préférence comprise entre 120 °C et 150 °C.

3. Procédé selon la revendication 1 ou 2, **caractérisé**
- **en ce que** le constituant fluxant est une huile ou un mélange d'huiles choisi dans le groupe des huiles ou graisses plastifiantes, des huiles minérales, des huiles synthétiques et végétales et des dérivés préparés à partir de celles-ci, qui sont appropriés pour dissoudre le bitume.

4. Procédé selon la revendication 1, **caractérisé**
- **en ce que** le constituant de charge et le constituant de cire sont mélangés dans une proportion de 90 à 50 parties en poids de constituant de charge et de 10 à 50 parties en poids de constituant de cire et sont ajoutés avec le constituant fluxant au mélange asphaltique dans l'installation de mélange à chaud.

5. Procédé selon l'une des revendications 1 à 4, **caractérisé**
- **en ce que** le constituant de cire solide contient en outre une huile ou un mélange d'huiles choisi parmides huiles ou graisses plastifiantes, des huiles minérales, des huiles synthétiques et végétales et des dérivés préparés à partir de celles-ci, qui sont appropriés pour dissoudre le bitume, dans lequel l'huile ou le mélange d'huiles est en particulier au moins une partie du constituant fluxant, et/ou
- **en ce que** le constituant de cire solide contient en outre des fibres.

6. Procédé selon l'une des revendications 1 à 5, **caractérisé**
- **en ce que** l'activateur éventuellement ajouté est choisi parmi l'eau, les glycols, les alcools gras, les tensioactifs (anioniques, non anioniques ou catoniques) ou leurs solutions dans l'eau ou d'autres solvants, les acides et les bases organiques et inorganiques, les sels métalliques, le soufre et ses composés, les peroxydes, le latex ou les dispersions de résine synthétique.

7. Procédé selon l'une des revendications 1 à 6, **caractérisé**
- **en ce que** le rapport entre le constituant fluxant et le constituant de cire solide est compris entre 40:60 et 70:30.

8. Procédé selon l'une des revendications 1 à 7, **caractérisé**
- **en ce que** le rapport entre le bitume et l'additif réactif est compris entre 30:70 et 70:30.

9. Procédé selon l'une des revendications 1 à 8, **caractérisé**
- **en ce que** le matériau de construction asphaltique prêt à être posé présente une teneur en minéraux de 85 à 95 % en poids, une teneur en bitume de 2,0 à 14 % en poids et une teneur en additif réactif de 1 à 13 % en poids, et/ou
- **en ce que** le matériau de construction asphaltique présente les proportions de liant, de minéraux et d'additifs autorisées par la norme EN 13108 et/ou par les exigences et spécifications relatives aux enrobés à froid.

10. Procédé selon l'une des revendications 1 à 9, **caractérisé en ce que** les matières minérales consistent en ou comprennent de l'asphalte recyclé.

11. Procédé selon l'une des revendications 1 à 10, **caractérisé**
- **en ce que** le constituant fluxant et le constituant de cire solide sont mélangés séparément au mélange asphaltique, ou
- **en ce que** le constituant fluxant et le constituant de cire solide sont mélangés l'un à l'autre et sont ensuite ajoutés au mélange asphaltique en tant que constituant de cire solide fluxant.

12. **Utilisation** d'un additif réactif lors de la fabrication d'un matériau de construction asphaltique à base d'un mélange asphaltique de matières minérales et de bitume, **caractérisée en ce que** l'additif réactif contient un constituant fluxant dissolvant le bitume et un constituant de cire solide, le constituant de cire solide contenant comme constituant de charge une charge telle que de la pierre pulvérisée, du talc en poudre, du ciment, de la farine de chaux, du gypse, du ciment de cendres volantes ou de la farine de scorie de la production de fer ou d'acier et, en tant que constituant de cire, une cire synthétique ou naturelle.

13. Utilisation selon la revendication 12, **caractérisée en ce que** le mélange asphaltique présente, avant l'ajout de l'additif réactif, une température qui correspond au moins au point de fusion de la cire contenue dans le constituant de cire solide, la température étant de préférence comprise entre 120 °C et 150 °C.

14. **Matériau de construction asphaltique** contenant un mélange asphaltique de matières minérales et de bitume, **caractérisé en ce que** le matériau de construction asphaltique contient un additif réactif qui contient un constituant fluxant dissolvant le bitume et un constituant de cire solide, le constituant de cire solide contenant comme constituant de charge une charge telle que de la pierre pulvérisée, du talc en poudre, du ciment, de la farine de chaux, du gypse, du ciment de cendres volantes ou de la farine de scorie de la production de fer ou d'acier et, en tant que constituant de cire, une cire synthétique ou naturelle.

15. Matériau de construction asphaltique selon la revendication 14, **caractérisé en ce qu'**il présente une température d'épandage comprise entre 0 °C et 130 °C.
